# EUROPÄISCHE PATENTANMELDUNG

(11) **EP 4 312 328 A2**
(43) Veröffentlichungstag der Anmeldung: **31.01.2024**
(21) Anmeldenummer: 23188183.0
(22) Anmeldetag: 27.07.2023
(51) Int. Cl.: H02J 1/08, H02J 1/14

(54) **SYMMETRIERUNGSSCHALTUNG UND SYMMETRIERUNGSVERFAHREN FÜR EINE DC-VERSORGUNGSSTATION SOWIE DC-VERSORGUNGSSTATION MIT EINER SYMMETRIERUNGSSCHALTUNG**

(30) Priorität: 27.07.2022 DE 102022118892
(71) Anmelder: Compleo Charging Solutions AG, 44309 Dortmund (DE)
(72) Erfinder: Turki, Faical, 59174 Kamen (DE); Reising, Viktor, 58706 Menden (DE); Wohlfahrt, Thomas, 45721 Haltern am See (DE)
(74) Vertreter: Wickord, Wiro

(57) **Zusammenfassung**

Die Erfindung betrifft eine Symmetrierungsschaltung für eine DC-Versorgungsstation umfassend einen ersten Versorgungsleiter (DC+) und einen zweiten Versorgungsleiter (DC-) sowie einen Schutzleiter (PE), umfassend einen ersten Isolationswiderstand (1) mit einem ersten Widerstandswert und einen zweiten Isolationswiderstand (2) mit einem zweiten Widerstandswert, wobei der erste Isolationswiderstand (1) zwischen dem ersten Versorgungsleiter (DC+) und dem Schutzleiter (PE) gebildet ist und wobei der zweite Isolationswiderstand (2) zwischen dem zweiten Versorgungsleiter (DC-) und dem Schutzleiter (PE) gebildet ist und in einem Ausgangszustand die Widerstandswerte des ersten Isolationswiderstands (1) und des zweiten Isolationswiderstands (2) gleich sind, dadurch gekennzeichnet, dass eine Widerstandsausgleichseinrichtung mit wenigstens einem Widerstandsausgleichsmittel und mit wenigstens einem dem Widerstandsausgleichsmittel zugeordneten Schaltmittel vorgesehen ist, wobei das wenigstens eine Schaltmittel von einer Öffnungsstellung in eine Schließstellung umschaltbar ist und wobei das wenigstens eine Schaltmittel und das wenigstens eine Widerstandsausgleichsmittel den Versorgungsleitern (DC+, DC-) und dem Schutzleiter (PE) derart zugeordnet sind, dass das Widerstandsausgleichsmittel in der Schließstellung des Schaltmittels parallel zu dem ersten Isolationswiderstand (1) oder parallel zu dem zweiten Isolationswiderstand (2) verschaltet ist und einer ungleichmäßigen alterungsbedingten Reduzierung des ersten Widerstandswerts und/oder des zweiten Widerstandswerts entgegenwirkt. Ferner betrifft die Erfindung eine DC-Versorgungsstation mit einer Symmetrierungsschaltung sowie ein Symmetrierungsverfahren für eine DC-Versorgungsstation.

## Beschreibung

Die Erfindung betrifft eine Symmetrierungsschaltung für eine DC-Versorgungsstation umfassend einen ersten Versorgungsleiter mit einem ersten Anschlusspunkt und einen zweiten Versorgungsleiter mit einem zweiten Anschlusspunkt sowie einen Schutzleiter, wobei zwischen den Anschlusspunkten eine Ausgangsspannung bereitgestellt ist, umfassend einen ersten Isolationswiderstand mit einem ersten Widerstandswert und einen zweiten Isolationswiderstand mit einem zweiten Widerstandswert, wobei der erste Isolationswiderstand zwischen dem ersten Versorgungsleiter und dem Schutzleiter gebildet ist und wobei der zweite Isolationswiderstand zwischen dem zweiten Versorgungsleiter und dem Schutzleiter gebildet ist und in einem Ausgangszustand die Widerstandswerte des ersten Isolationswiderstands und des zweiten Isolationswiderstands zumindest näherungsweise beziehungsweise nominell gleich sind.

Ferner betrifft die Erfindung eine DC-Versorgungsstation mit einer Symmetrierungsschaltung sowie ein Symmetrierungsverfahren für eine DC-Versorgungsstation.

DC-Versorgungsstationen unterliegen hohen normativen Anforderungen, die heute üblicherweise durch ein Zusammenwirken von Hardware und Software gelöst werden. Eine Anforderung ist die Bereitstellung eines galvanisch getrennten IT-Systems auf der DC-Ausgangsseite der Versorgungsstation. Hierzu müssen definierte Widerstandswerte zwischen zwei Anschlusspunkten der DC-Versorgungsstation und dem Erdpotential, das über den Schutzleiter bereitgestellt ist, eingehalten werden. Die Widerstandswerte werden primär durch die Isolationswiderstände des ersten und des zweiten Versorgungsleiters definiert. Sie sind in dem Ausgangszustand der DC-Versorgungsstation, das heißt bei ihrer Inbetriebnahme beziehungsweise Auslieferung, nominell gleich groß und unterliegen dann der Alterung. Die Alterung kann sich gleichmäßig auf beide Anschlusspunkte beziehungsweise Versorgungsleiter auswirken oder unsymmetrisch ausgeprägt sein. Die Auslegung der Isolationswiderstände erfolgt dabei so, dass stets die höchste vorkommende Spannung gegen das Erdpotential Berücksichtigung findet.

Über das ausgangsseitige IT-System, welches über keinen festen Erdpotentialbezug verfügt, kann nur eine Ausgangsspannung zwischen den beiden Anschlusspunkten aktiv eingestellt beziehungsweise beeinflusst werden. Die jeweilige Spannung zwischen dem ersten Versorgungsleiter und dem Schutzleiter beziehungsweise dem Erdpotential einerseits und dem zweiten Versorgungsleiter und dem Schutzleiter beziehungsweise dem Erdpotential andererseits ergibt sich primär aus der Größe der Isolationswiderstände. Im Idealfall sind die Spannungswerte einer ersten Spannung zwischen dem ersten Versorgungsleiter und dem Schutzleiter und einer zweiten Spannung zwischen dem zweiten Versorgungsleiter und dem Schutzleiter betragsmäßig gleich groß. Sofern beispielsweise die Ausgangsspannung zwischen den Versorgungsleitern beziehungsweise den Anschlusspunkten 800V beträgt, liegen die gleich großen Spannungswerte für die erste und zweite Spannung bei einer symmetrischen Verteilung gegenüber dem Erdpotential bei +400V und bei -400V. Der Isolationswiderstand für den ersten Versorgungsleiter und für den zweiten Versorgungsleiter kann demzufolge nominell auf jeweils 400V ausgelegt werden. In der Praxis ergibt sich jedoch eine unsymmetrische Aufteilung der Spannungen. Ursächlich hierfür ist zum Beispiel die unterschiedliche Alterung der Isolationswiderstände. Beispielsweise wird die Unsymmetrie durch Verschmutzung und Feuchtigkeit verursacht. Die Isolationswiderstände werden daher auf den worst case ausgelegt, welcher eine nahezu vollständig unsymmetrische Aufteilung der Spannungen beschreibt. Dies hat zur Folge, dass die Isolationswiderstände auf die volle Ausgangsspannung von 800V ausgelegt werden müssen, die zwischen den Anschlusspunkten der Versorgungsleiter anliegt.

Aufgabe der vorliegenden Erfindung ist es, technische Mittel bereitzustellen, um der alterungsbedingten unsymmetrischen Aufteilung der Spannungen entgegenzuwirken.

Zur Lösung der Aufgabe ist die Erfindung in Verbindung mit dem Oberbegriff des Patentanspruchs 1 dadurch gekennzeichnet, dass eine Widerstandsausgleichseinrichtung mit wenigstens einem Widerstandsausgleichsmittel und mit wenigstens einem dem Widerstandsausgleichsmittel zugeordneten Schaltmittel vorgesehen ist, wobei das wenigstens eine Schaltmittel von einer Öffnungsstellung in wenigstens eine Schließstellung umschaltbar ist und wobei das wenigstens eine Schaltmittel und das wenigstens eine Widerstandsausgleichsmittel den Versorgungsleitern und dem Schutzleiter derart zugeordnet sind, dass das Widerstandsausgleichsmittel in der Schließstellung des Schaltmittels parallel zu dem ersten Isolationswiderstand oder parallel zu dem zweiten Isolationswiderstand verschaltet ist und einer ungleichmäßigen alterungsbedingten Reduzierung des ersten Widerstandswerts und/oder des zweiten Widerstandswerts entgegenwirkt.

Der besondere Vorteil der Erfindung besteht darin, dass mit Hilfe der Widerstandsausgleichseinrichtung bedarfsorientiert ein Isolationsausgleichswiderstand zwischen dem ersten Versorgungsleiter und dem Schutzleiter und/oder dem zweiten Versorgungsleiter und dem Schutzleiter bereitgestellt wird. Der Isolationsausgleichswiderstand wirkt zusätzlich zum Isolationswiderstand. Insofern kann über ihn der jeweils insgesamt wirksame Widerstand und damit die erste Spannung zwischen dem ersten Versorgungsleiter und dem Schutzleiter und/oder die zweite Spannung zwischen dem zweiten Versorgungsleiter und dem Schutzleiter beeinflusst werden. Die Beeinflussung der Spannungen erfolgt so, dass der unterschiedlichen Alterung der Isolationswiderstände entgegengewirkt wird beziehungsweise die Spannungen sich möglichst symmetrisch gegenüber dem Erdpotential des Schutzleiters einstellen.

Als Schaltmittel kommen bevorzugt Halbleiterbauelemente zum Einsatz. Es können beispielsweise aktive Halbleiterbauelemente, insbesondere Transistoren, oder selbstschaltende Halbleiterbauelemente, beispielsweise Zenerdioden beziehungsweise Z-Dioden verwendet werden.

Die verwendeten Schaltmittel verfügen bevorzugt über eine Öffnungsstellung, in der ein Eingang und ein Ausgang des Schaltmittels nicht verbunden sind, sowie wenigstens eine und optional zwei oder mehr Schließstellungen, in denen der Eingang mit einem ersten und einzigen oder einem weiteren Ausgang des Schaltmittels verbunden ist.

Als Widerstandsausgleichsmittel wird beispielsweise ein Isolationsausgleichswiderstand oder ein Isolationsausgleichskondensator verwendet.

Nach einer bevorzugten Ausführungsform der Erfindung sieht die Widerstandsausgleichseinrichtung ein dem ersten Isolationswiderstand zugeordnetes erstes Schaltmittel und ein dem zweiten Isolationswiderstand zugeordnetes zweites Schaltmittel sowie wenigstens zwei Widerstandsausgleichsmittel vor, wobei die Schaltmittel eingerichtet und angeordnet sind zum wahlweisen Verschalten eines ersten Widerstandsausgleichsmittels parallel zu dem ersten Isolationswiderstand und eines zweiten Widerstandsausgleichsmittels parallel zu dem zweiten Isolationswiderstands. Vorteilhaft können hierdurch dem Alterungszustand der Isolationswiderstände entsprechend die jeweiligen Widerstandsausgleichsmittel parallel zu dem ersten Isolationswiderstand und dem zweiten Isolationswiderstand geschaltet werden und es kann einer unsymmetrischen Spannungsverteilung wirksam entgegenwirkt werden.

Nach einer Weiterbildung der Erfindung sieht die Widerstandsausgleichseinrichtung einen ersten Ausgleichsschaltungszweig vor, der parallel zu dem ersten Isolationswiderstand vorgesehen ist und von dem ersten Versorgungsleiter zu dem Schutzleiter geführt ist. Alternativ oder bevorzugt zusätzlich kann die Widerstandsausgleichseinrichtung einen zweiten Ausgleichsschaltungszweig vorsehen, der parallel zu dem zweiten Isolationswiderstand vorgesehen ist und von dem zweiten Versorgungsleiter zu dem Schutzleiter geführt ist.

Das erste Schaltmittel kann in dem ersten Ausgleichsschaltungszweig und das zweite Halbleiterbauelement in dem zweiten Schaltmittel vorgesehen sein. In diesem Fall sind das erste Schaltmittel oder das zweite Schaltmittel parallel zu dem ersten Isolationswiderstand und/oder dem zweiten Isolationswiderstand angeordnet. Beispielsweise können selbstschaltende Zenerdioden als Schaltmittel vorgesehen werden, welche unterhalb einer bauelementspezifischen Durchbruchsspannung sperren und ansonsten durchlässig sind. Es wird insofern über die Ausgleichsschaltungszweige mit den selbstschaltenden Halbleiterbauelementen das diesen zugeordnete Widerstandsausgleichsmittel spannungsabhängig aktiviert und hierüber die erste Spannung und die zweite Spannung beeinflusst.

Beispielsweise sind das erste Schaltmittel und ein erster Isolationsausgleichswiderstand als erstes Widerstandsausgleichsmittel einerseits und/oder das zweite Schaltmittel und ein zweiter Isolationsausgleichswiderstand als zweites Widerstandausgleichsmittel andererseits in Reihe geschaltet. Das jeweilige Schaltmittel kann durch ein Halbleiterbauelement, insbesondere durch ein aktives Halbleiterbauelement, beispielsweise als ein Transistor gebildet sein. Durch einen getakteten beziehungsweise gepulsten Betrieb des Transistors werden dann der Stromfluss durch den jeweiligen Isolationsausgleichswiderstand definiert und die erste Spannung sowie die zweite Spannung aktiv beeinflusst beziehungsweise eingestellt.

Nach einer Weiterbildung der Erfindung sieht die Widerstandsausgleichseinrichtung ein erstes Spannungsbestimmungsmittel und/oder ein zweites Spannungsbestimmungsmittel vor zur Bestimmung eines Spannungswerts für die erste Spannung zwischen dem ersten Versorgungsleiter und dem Schutzleiter und/oder eines Spannungswerts für die zweite Spannung zwischen dem zweiten Versorgungsleiter und dem Schutzleiter. Vorteilhaft sind durch die Spannungsbestimmungsmittel die Spannungswerte und damit der Grad der Symmetrie beziehungsweise Unsymmetrie in der Spannungsverteilung bekannt. Insbesondere beim Vorsehen eines aktiven Halbleiterbauelements als Schaltmittel, beispielsweise eines Transistors, kann dann eine Regelung vorgesehen werden, über die sich die Spannung nahezu vollständig und dauerhaft symmetrieren lässt. Die vorrichtungsseitigen Isolationswiderstände können demzufolge für den Fall einer symmetrischen Spannungsverteilung ausgelegt und vergleichsweise klein gewählt werden.

Nach einer Weiterbildung der Erfindung ist die Symmetrierungsschaltung selbst symmetrisch bezüglich der Versorgungsleiter und des Schutzleiters ausgebildet. Vorteilhaft reduziert sich die Komplexität der Schaltungsanordnung durch ihren symmetrischen Aufbau und die Symmetrierungsschaltung zeigt unabhängig davon, ob der dem ersten Versorgungsleiter oder dem zweiten Versorgungsleiter zugeordnete Isolationswiderstand stärker altert als der jeweils andere, stets das gleiche Verhalten.

Zur Lösung der Aufgabe weist die Erfindung die Merkmale des Patentanspruchs 14 auf. Die DC-Versorgungsstation verfügt insofern über eine erfindungsgemäße Symmetrierungsschaltung, welche dazu dient, einer unsymmetrischen Verteilung der zwischen den Anschlusspunkten bereitgestellten Spannungen gegenüber dem Erdpotential des Schutzleiters entgegenzuwirken.

Zur Lösung der Aufgabe weist die Erfindung die Merkmale des Patentanspruchs 15 auf. Demzufolge sieht ein Symmetrierungsverfahren für eine DC-Versorgungsstation, die einen ersten Versorgungsleiter und einen zweiten Versorgungsleiter mit je einem Anschlusspunkt, einen Schutzleiter sowie wenigstens ein Widerstandsausgleichsmittel und mindestens ein dem wenigstens einen Widerstandsausgleichsmittel zugeordnetes Schaltmittel umfasst und bei der zwischen dem ersten Versorgungsleiter und dem Schutzleiter ein erster Isolationswiderstand und zwischen dem zweiten Versorgungsleiter und dem Schutzleiter ein zweiter Isolationswiderstand gebildet sind, vor, dass mit Hilfe des Schaltmittels das Widerstandsausgleichsmittel wahlweise parallel zu dem ersten Isolationswiderstand oder dem zweiten Isolationswiderstand verschaltet wird derart, dass sich eine Symmetrie in Bezug auf eine über den ersten Isolationswiderstand abfallende erste Spannung und eine über den zweiten Isolationswiderstand abfallende zweite Spannung einstellt und/oder einer unsymmetrischen Verteilung einer Ausgangsspannung zwischen den Anschlusspunkten zum Erdpotential des Schutzleiters entgegengewirkt wird.

Vorteilhaft kann durch das erfindungsgemäße Symmetrierungsverfahren einer unsymmetrischen Verteilung der Ausgangsspannung einer DC-Ladestation, welche zwischen den Anschlusspunkten des ersten und zweiten Versorgungsleiters bereitgestellt wird, relativ zum Erdpotential des Schutzleiters entgegengewirkt werden. Der erste Isolationswiderstand für den ersten Versorgungsleiter und der zweite Isolationswiderstand für den zweiten Versorgungsleiter müssen demzufolge nicht auf die volle Ausgangsspannung zwischen den Anschlusspunkten der Versorgungsleiter ausgelegt werden.

Nach einer bevorzugten Ausführungsform der Erfindung werden ein erster Spannungswert für die erste Spannung zwischen dem ersten Versorgungsleiter und dem Schutzleiter und/oder ein zweiter Spannungswert für die zweite Spannung zwischen dem zweiten Versorgungsleiter und dem Schutzleiter bestimmt. Beispielsweise können Spannungsbestimmungsmittel, beispielsweise Voltmeter vorgesehen werden zur messtechnischen Ermittlung der Spannungswerte für die erste Spannung und/oder die zweite Spannung. Als schaltbare Halbleiterbauelemente können beispielsweise aktive Halbleiterbauelemente, insbesondere Transistoren, dienen. Die aktiven Halbleiterbauelemente können beispielsweise getaktet beziehungsweise gepulst betrieben werden. Hierzu kann ein Ansteuermodul vorgesehen werden, welches mit den Spannungsbestimmungsmitteln zusammenwirkt und einen Steuerungs- beziehungsweise Regelbetrieb ermöglicht.

Nach einer Weiterbildung der Erfindung werden eine Mehrzahl von Schaltmitteln und ein Isolationsausgleichskondensator als Widerstandsausgleichsmittel verwendet. Die Schaltmittel werden so betätigt, dass der Isolationsausgleichskondensator zunächst parallel zu dem ersten Isolationswiderstand vorgesehen wird und mit dem ersten Versorgungsleiter und dem Schutzleiter verbunden wird und dass der Isolationsausgleichskondensator dann parallel zu dem zweiten Isolationswiderstand vorgesehen wird und mit dem zweiten Versorgungsleiter und dem Schutzleiter verbunden wird. Dabei wird der Isolationsausgleichskondensator je nach Spannungsverteilung abwechselnd geladen und entladen und sorgt so für den Ausgleich der Spannungen. Vorteilhaft ist ein besonders verlustarmer beziehungsweise verlustfreier Spannungsausgleich möglich, der insbesondere bei einem Hochleistungssystem mit Spannungen von 1000V oder mehr Anwendung finden kann.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Energiespeicher zur Verfügung gestellt werden.

Eine DC-Versorgungsstation im Sinne der Erfindung dient der Bereitstellung elektrischer Energie für elektrisch betreibbare Fahrzeuge im öffentlichen oder privaten Bereich. Darüber hinaus kann vorgesehen sein, dass die DC-Versorgungsstation genutzt wird, um im Rahmen eines übergeordneten Energie- und/oder Lastmanagements Energie aus einem Energiespeicher des an die DC-Versorgungsstation angeschlossenen elektrisch betreibbaren Fahrzeugs in das Versorgungsnetz ein- beziehungsweise zurückzuspeisen. Auf diese Weise können Spitzenbedarfe abgedeckt und das Versorgungsnetz stabilisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Symmetrierungsschaltung beziehungsweise der DC-Versorgungsstation gelten selbstverständlich auch im Zusammenhang mit dem erfindungsgemäßen Symmetrierungsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: ein Schaltbild einer Symmetrierungsschaltung in einer ersten Ausführungsform,
- Fig. 2: ein Schaltbild der Symmetrierungsschaltung in einer zweiten Ausführungsform,
- Fig. 3: ein Schaltbild der Symmetrierungsschaltung in einer dritten Ausführungsform und
- Fig. 4: ein Schaltbild der Symmetrierungsschaltung in einer vierten Ausführungsform.

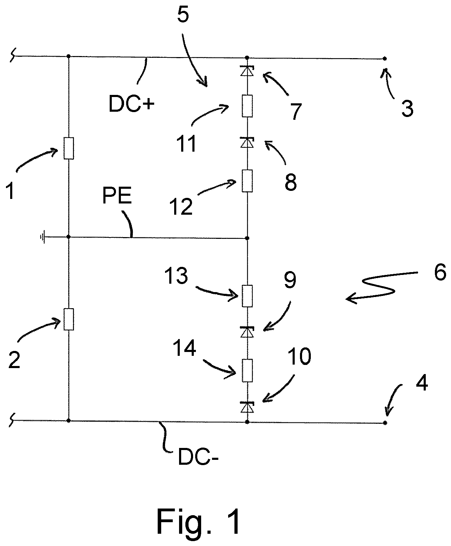

Eine erste Ausführungsform einer Symmetrierungsschaltung für eine DC-Versorgungsstation ist in Figur 1 dargestellt. Vorgesehen ist ein erster Versorgungsleiter DC+, der einen ersten Anschlusspunkt 3 der DC-Versorgungsstation bereitstellt, ein zweiter Versorgungsleiter DC-, der einen zweiten Anschlusspunkt 4 der DC-Versorgungsstation bereitstellt, sowie ein Schutzleiter PE, der auf Erdpotential liegt. Zwischen den Anschlusspunkten 3, 4 der DC-Versorgungsstation wird eine Versorgungs- beziehungsweise Ausgangsspannung von zum Beispiel 800V bis 1000V bereitgestellt.

Die Versorgungsleiter DC+, DC- sind gegen den Schutzleiter PE beziehungsweise das Erdpotential isoliert. Gebildet ist insofern ein erster Isolationswiderstand 1 zwischen dem ersten Versorgungsleiter DC+ und dem Schutzleiter PE und ein zweiter Isolationswiderstand 2 zwischen dem zweiten Versorgungsleiter DC- und dem Schutzleiter PE. In einem Ausgangs- beziehungsweise Neuzustand sind beide Versorgungsleiter DC+, DC- in gleicher Weise gegen das Erdpotential isoliert. Die Isolationswiderstände 1, 2 sind nominell gleich groß und die Ausgangsspannung verteilt sich insofern symmetrisch mit der Folge, dass eine erste Spannung zwischen dem ersten Versorgungsleiter DC+ und dem Schutzleiter PE und eine zweite Spannung zwischen dem zweiten Versorgungsleiter DC- und dem Schutzleiter PE ebenfalls gleich groß sind. Im vorliegenden Beispiel beträgt ein Spannungswert der ersten Spannung und der zweiten Spannung jeweils etwa 400V bis 500V.

Insbesondere durch alterungsbedingte Prozesse verändern sich die Isolationswiderstände 1, 2. Die Änderung erfolgt typischerweise nicht gleichmäßig. Um diese ungleichmäßige Alterung auszugleichen und einer unsymmetrischen Spannungsverteilung der Anschlussspannung bezogen auf das Erdpotential entgegenzuwirken, sieht die Symmetrierungsschaltung eine Widerstandsausgleichseinrichtung vor. Teil der Widerstandsausgleichseinrichtung sind ein erster Ausgleichsschaltungszweig 5 sowie ein zweiter Ausgleichsschaltungszweig 6. Der erste Ausgleichsschaltungszweig 5 ist zwischen dem ersten Versorgungsleiter DC+ und dem Schutzleiter PE vorgesehen und verbindet diese. Der zweite Ausgleichsschaltungszweig 6 ist in analoger Weise zwischen dem zweiten Versorgungsleiter DC- und dem Schutzleiter PE vorgesehen.

In dem ersten Ausgleichsschaltungszweig 5 sind eine erste Zenerdiode 7, ein erster Isolationsausgleichswiderstand 11, eine zweite Zenerdiode 8 und ein zweiter Isolationsausgleichswiderstand 12 in Reihe geschaltet. In dem zweiten Ausgleichsschaltungszweig 6 sind analog eine dritte Zenerdiode 9, ein dritter Isolationsausgleichswiderstand 13, eine vierte Zenerdiode 10 sowie ein vierter Isolationsausgleichswiderstand 14 in Reihe verschaltet. In Bezug auf die Symmetrierungsschaltung ergibt sich insofern ein symmetrischer Aufbau. Die Anordnung der Zenerdioden 7, 8, 9, 10 und der Isolationsausgleichswiderstände 11, 12, 13, 14 ist bezogen auf die Versorgungsleiter DC+, DC- und den Schutzleiter PE symmetrisch.

Sofern nun die im Ausgangszustand gleichen Isolationswiderstände 1, 2 unterschiedlich altern, verteilt sich die Ausgangsspannung zwischen den Anschlusspunkten 3, 4 nicht mehr symmetrisch in Bezug auf das Erdpotential des Schutzleiters PE. Steigt beispielsweise die Spannung über den ersten Isolationswiderstand 1 an, erhöht sich zugleich auch die Spannung, die dem ersten Ausgleichsschaltungszweig 5 zugeordnet ist. In der Folge ist die erste Spannung zwischen dem ersten Versorgungsleiter DC+ und dem Schutzleiter PE größer als die zweite Spannung zwischen dem zweiten Versorgungsleiter DC- und dem Schutzleiter PE. Sofern die Spannung die Größe der Durchbruchspannung der Zenerdioden 7, 8 erreicht, werden diese durchlässig und gelangen in ihre Schließstellung. In der Schließstellung reduziert sich der Gesamtwiderstand zwischen dem ersten Versorgungsleiter DC+ und dem Schutzleiter PE mit der Folge, dass der unsymmetrischen Spannungsverteilung entgegengewirkt ist. Typischerweise ist die Dimensionierung der Zenerdiode 7, 8 und/oder der Isolationsausgleichswiderstände 11, 12 in dem ersten Ausgleichsschaltungszweig 5 so, dass die Zenerdioden 7, 8 durchlässig werden, wenn die erste Spannung wenigstens doppelt so hoch oder dreimal so hoch ist wie die zweite Spannung, die zwischen dem zweiten Versorgungsleiter DC- und dem Schutzleiter PE gebildet ist.

Im vorliegenden Beispiel fungieren die Isolationsausgleichswiderstände 11, 12, 13, 14 als Widerstandsausgleichsmittel der Widerstandsausgleichseinrichtung. Die den Isolationsausgleichswiderständen 11, 12, 13, 14 zugeordneten Zenerdioden 7, 8, 9, 10 bilden als selbstschaltende Halbleiterbauelemente Schaltmittel der Widerstandsausgleichseinrichtung.

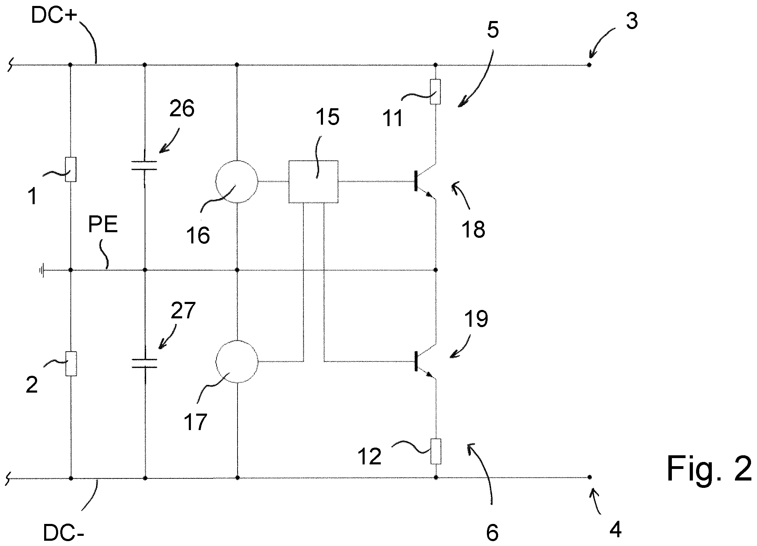

Eine zweite Ausführungsform der Symmetrierungsschaltung nach Figur 2 sieht vor, dass ein erster Transistor 18 als ein erstes Schaltmittel und aktives, schaltbares Halbleiterbauelement in Reihe zu dem ersten Isolationsausgleichswiderstand 11 und ein zweiter Transistor 19 als ein zweites in Reihe zu dem zweiten Isolationsausgleichswiderstand 12 geschaltetes aktives, schaltbares Halbleiterbauelement (Schaltmittel) vorgesehen sind. Der erste Isolationsausgleichswiderstand 11 und der erste Transistor 18 sind dabei dem ersten Ausgleichsschaltungszweig 5 und über diesen dem ersten Isolationswiderstand 1 zugeordnet. Analog sind der zweite Isolationsausgleichswiderstand 12 und der zweite Transistor 19 dem zweiten Ausgleichsschaltungszweig 6 und funktional dem zweiten Isolationswiderstand 2 zugeordnet.

Die Transistoren 18, 19 können individuell getaktet beziehungsweise gepulst betrieben werden und so den jeweiligen Widerstand verändern, der in den Ausgleichsschaltungszweigen 5,6 wirkt. Über die Widerstandsänderung kann dann die Verteilung der Ausgangsspannung zwischen den Anschlusspunkten 3, 4 der DC-Versorgungsstation relativ zum Erdpotential des Schutzleiters PE eingestellt beziehungsweise beeinflusst werden.

Die Ansteuerung der Transistoren 18, 19 erfolgt im vorliegenden Beispiel über ein Ansteuermodul 15 der Widerstandsausgleichseinrichtung. Das Ansteuermodul 15 empfängt zwei Spannungswerte für die erste Spannung und die zweite Spannung, die zwischen dem ersten Versorgungsleiter DC+ und dem PE-Leiter einerseits und dem zweiten Versorgungsleiter DC- und dem Schutzleiter PE andererseits anliegen. Die Spannungen werden über geeignete Spannungsbestimmungsmittel 16, 17, die vorliegend lediglich exemplarisch durch zwei Voltmeter gebildet sind, bestimmt. Der Betrieb der Transistoren 18, 19 kann steuernd oder regelnd erfolgen. Insbesondere kann der Betrieb der Transistoren 18, 19 so vorgesehen werden, dass die Ausgleichsspannung sich stets nahezu symmetrisch zum Erdpotential aufteilt.

Die Symmetrierungsschaltung nach Fig. 2 sieht parallel zu dem ersten Ausgleichsschaltungszweig 5 und dem zweiten Ausgleichsschaltungszweig 6 zwei MV-Kondensatoren 26, 27 vor. Die MV-Kondensatoren 26, 27 dienen der Filterung beziehungsweise Glättung der Spannung beim gepulsten beziehungsweise getakteten Betrieb der Transistoren 18, 19.

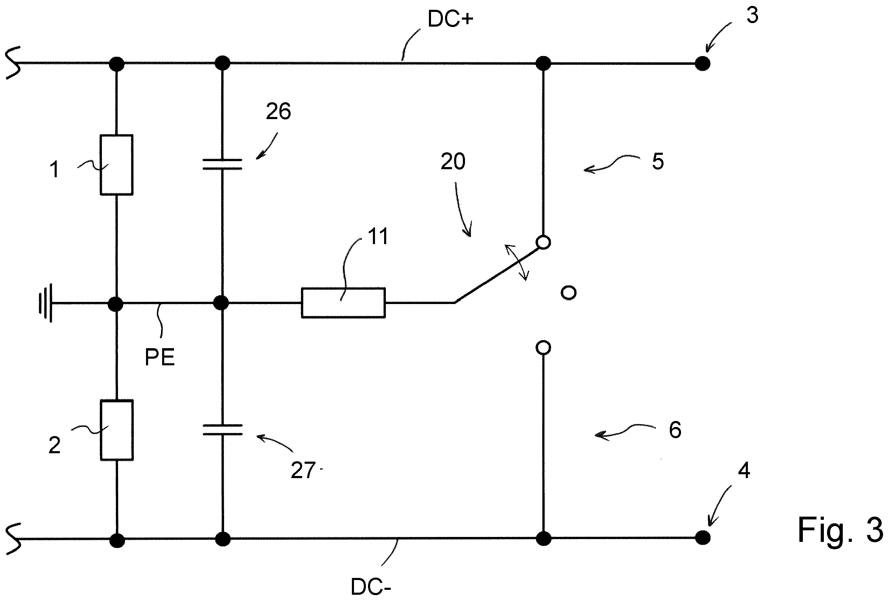

Eine dritte Ausführungsform der Symmetrierungsschaltung nach Fig. 3 ist in Bezug auf die Isolationswiderstände 1, 2 und die MV-Kondensatoren 26, 27 in bekannter Weise aufgebaut. Sie sieht jedoch einen Isolationsausgleichswiderstand 11 als Widerstandsausgleichsmittel sowie ein aktives, das heißt aktiv schaltbares Halbleiterbauelement 20 als Schaltmittel der Widerstandsausgleichseinrichtung vor.

Das aktive Halbleiterbauelement 20 kann in drei Schaltstellungen verbracht werden. In einer Öffnungsstellung des aktiven Halbleiterbauelements 20 ist der Isolationswiderstand nicht stromdurchflossen. In einer ersten und einer weiteren Schließstellung des aktiven Halbleiterbauelements 20 ist der Isolationsausgleichswiderstand wahlweise mit dem ersten Versorgungsleiter DC+ oder mit dem zweiten Versorgungsleiter DC- verbunden und Teil des ersten Ausgleichsschaltungszweigs 5 oder des zweiten Ausgleichsschaltungszweigs 6. Je nach Schaltstellung des aktiven Halbleiterschaltelements 20 ist der Isolationsausgleichswiderstand demzufolge parallel zu dem ersten Isolationswiderstand 1 oder dem zweiten Isolationswiderstand 2 vorgesehen und trägt so zum Widerstand und zur Symmetrierung der Spannungen bei.

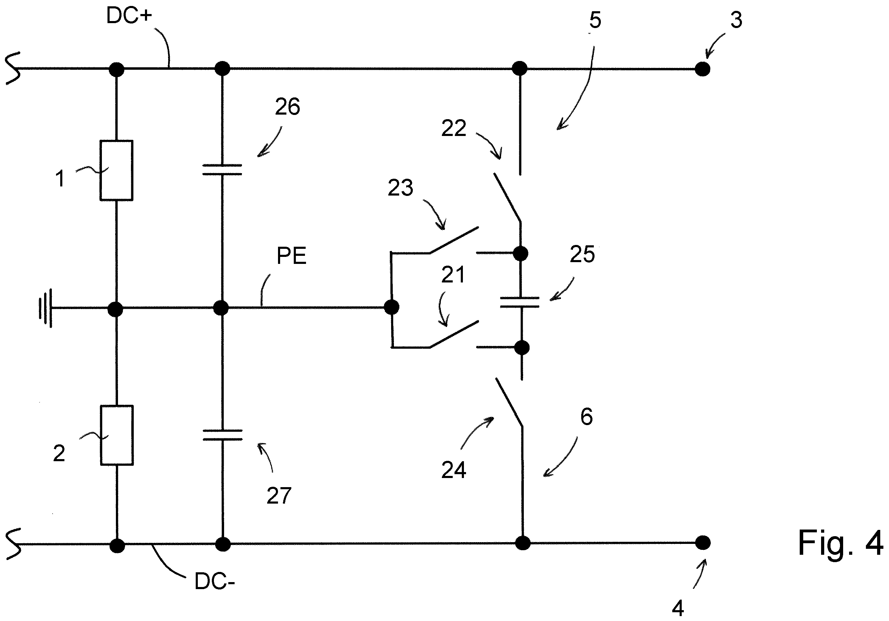

Fig. 4 zeigt eine vierte Ausführungsform der Symmetrierungsschaltung. Die Widerstandsausgleichseinrichtung der Symmetrierungsschaltung sieht einen Isolationsausgleichskondensator 25 als Widerstandsausgleichsmittel sowie vier dem Isolationsausgleichskondensator 25 zugeordnete aktive Halbleiterbauelemente 21, 22, 23, 24 als Schaltmittel vor. Die aktiven Halbleiterbauelemente 21, 22, 23, 24 sind dem Isolationsausgleichskondensator 25 so zugeordnet, dass über diesen wahlweise der erste Versorgungsleiter DC+ oder der zweite Versorgungsleiter DC- mit dem Schutzleiter PE verbindbar sind. Eine Verbindung des Schutzleiters PE zum ersten Versorgungsleiter DC+ ist hergestellt, wenn ein erstes aktives Halbleiterbauelement 21 und ein zweites aktives Halbleiterbauelement 22 in ihrer Schließstellung vorgesehen sind. Analog wird der Schutzleiter PE mit dem zweiten Versorgungsleiter DCverbunden, wenn ein drittes aktives Halbleiterbauelement 23 und ein zweites aktives Halbleiterbauelement 24 in ihrer Schließstellung vorgesehen sind.

Der Spannungsausgleich erfolgt nun so, dass der Isolationsausgleichskondensator 25 geladen wird, wenn er mit demjenigen Versorgungsleiter DC+, DC- verbunden ist, der gegenüber dem Schutzleiter PE das größere Potenzial bereitstellt. Dann werden die aktiven Halbleiterbauelemente 21, 22, 23, 24 geschaltet und der Isolationsausgleichskondensator 25 wird mit dem anderen Versorgungsleiter DC+, DCverbunden. In dieser Schaltstellung entlädt er sich. Wird dieser Vorgang wiederholt, sorgt der sich sequentiell aufladende und entladende Isolationsausgleichskondensator 25 für eine aktive, im Wesentlichen verlustfreie beziehungsweise verlustarme Symmetrierung der Spannungen.

Aufgrund der geringen Verluste findet die vierte Ausführungsform der Symmetrierungsschaltung bevorzugt bei einem Hochleistungssystem mit Spannungen von etwa 1000V oder mehr Anwendung. Die durch die Mehrzahl an Schaltmitteln 21, 22, 23, 24 verursachten Mehrkosten fallen hier weniger ins Gewicht.

Um die Schaltmittel 20, 21, 22, 23, 24 der Symmetrierungsschaltungen nach der dritte und der vierten Ausführungsform anzusteuern, können beispielsweise das aus der Fig. 2 bekannte Ansteuermodul 15 verwendet und der erste und der zweite Spannungswert in bekannter Weise mit Hilfe der Spannungsbestimmungsmittel 16, 17 ermittelt werden. Alternativ kann die Ansteuerung der Schaltmittel 20, 21, 22, 23, 24 beispielsweise von einem ohnehin vorgesehenen Steuergerät der DC-Versorgungsstation mit übernommen werden.

Gleiche Bauteile und Bauteilfunktionen sind durch gleiche Bezugszeichen gekennzeichnet.

## Patentansprüche

1. Symmetrierungsschaltung für eine DC-Versorgungsstation umfassend einen ersten Versorgungsleiter (DC+) und einen zweiten Versorgungsleiter (DC-) sowie einen Schutzleiter (PE), umfassend einen ersten Isolationswiderstand (1) mit einem ersten Widerstandswert und einen zweiten Isolationswiderstand (2) mit einem zweiten Widerstandswert, **dadurch gekennzeichnet, dass** eine Widerstandsausgleichseinrichtung mit wenigstens einem Widerstandsausgleichsmittel und mit wenigstens einem dem Widerstandsausgleichsmittel zugeordneten Schaltmittel vorgesehen ist, wobei das wenigstens eine Schaltmittel von einer Öffnungsstellung in eine Schließstellung umschaltbar ist und wobei das wenigstens eine Schaltmittel und das wenigstens eine Widerstandsausgleichsmittel den Versorgungsleitern (DC+, DC-) und dem Schutzleiter (PE) derart zugeordnet sind, dass das Widerstandsausgleichsmittel in der Schließstellung des Schaltmittels parallel zu dem ersten Isolationswiderstand (1) oder parallel zu dem zweiten Isolationswiderstand (2) verschaltet ist.

2. Symmetrierungsschaltung nach Anspruch 1, **dadurch gekennzeichnet, dass** die Widerstandsausgleichseinrichtung (5, 6) eine Mehrzahl von Schaltmitteln (7, 8, 9, 10, 18, 19) und/oder eine Mehrzahl von Widerstandsausgleichsmitteln (11, 12, 13, 14) vorsieht und/oder dass als das wenigstens eine Widerstandsausgleichsmittel ein Isolationsausgleichswiderstand (11, 12, 13, 14) und/oder ein Isolationsausgleichskondensator (25) vorgesehen sind.

3. Symmetrierungsschaltung nach Anspruch 1 oder 2, **dadurch gekennzeichnet, dass** die Widerstandsausgleichseinrichtung (5, 6) ein dem ersten Isolationswiderstand (1) zugeordnetes erstes Schaltmittel und ein dem zweiten Isolationswiderstand (2) zugeordnetes zweites Schaltmittel sowie wenigstens zwei Widerstandsausgleichsmittel vorsieht und dass die Schaltmittel eingerichtet und angeordnet sind zum wahlweisen Verschalten eines ersten Widerstandsausgleichsmittels parallel zu dem ersten Isolationswiderstand (1) und eines zweiten Widerstandsausgleichsmittels parallel zu dem zweiten Isolationswiderstands (2).

4. Symmetrierungsschaltung nach einem der Ansprüche 1 bis 3, **dadurch gekennzeichnet, dass** die Widerstandsausgleichseinrichtung einen ersten Ausgleichsschaltungszweig (5) vorsieht, wobei der erste Ausgleichsschaltungszweig (5) parallel zu dem ersten Isolationswiderstand (1) vorgesehen ist und den ersten Versorgungsleiter (DC+) mit dem Schutzleiter (PE) verbindet, und/oder dass die Widerstandsausgleichseinrichtung einen zweiten Ausgleichsschaltungszweig (6) vorsieht, wobei der erste Ausgleichsschaltungszweig (6) parallel zu dem zweiten Isolationswiderstand (2) vorgesehen ist und den zweiten Versorgungsleiter (DC-) mit dem Schutzleiter (PE) verbindet.

5. Symmetrierungsschaltung nach Anspruch 4, **dadurch gekennzeichnet, dass** das erste Schaltmittel in dem ersten Ausgleichsschaltungszweig (5) und/oder das zweite Schaltmittel in dem zweiten Ausgleichsschaltungszweig (6) vorgesehen sind.

6. Symmetrierungsschaltung nach einem der Ansprüche 3 bis 5, **dadurch gekennzeichnet, dass** das erste Schaltmittel und/oder das zweite Schaltmittel in Reihe zu dem wenigstens einen Widerstandsausgleichsmittel verschaltet sind, wobei bevorzugt das erste Schaltmittel in Reihe zu dem ersten Widerstandsausgleichsmittel (1) und/oder das zweite Schaltmittel in Reihe zu dem zweiten Widerstandsausgleichsmittel (2) angeordnet sind.

7. Symmetrierungsschaltung nach einem der Ansprüche 1 bis 6, **dadurch gekennzeichnet, dass** das Schaltmittel als ein schaltbares Halbleiterbauelement und bevorzugt als aktives Halbleiterbauelement (20, 21, 22, 23, 24) und/oder als ein selbstschaltendes Halbleiterbauelement und/oder als ein elektromechanisches Schaltmittel ausgebildet ist und/oder dass das Schaltmittel wenigstens einen ersten Schaltzustand und einen zweiten Schaltzustand vorsieht sowie optional einen dritten Schaltzustand, wobei in dem ersten Schaltzustand das Schaltmittel in einer Öffnungsstellung vorgesehen ist und ein Eingang des Schaltmittels und ein Ausgang des Schaltmittels nicht verbunden sind, wobei in dem zweiten Schaltzustand das Schaltmittel in einer ersten Schließstellung vorgesehen ist und der Eingang des Schaltmittels mit einem einzigen und/oder ersten Ausgang des Schaltmittels verbunden ist und wobei in dem optionalen dritten Schaltzustand das Schaltmittel in einer weiteren Schließstellung vorgesehen ist und der Eingang des Schaltmittels mit einem zweiten Ausgang des Schaltmittels verbunden ist.

8. Symmetrierungsschaltung nach einem der Ansprüche 1 bis 7, **dadurch gekennzeichnet, dass** eine Zenerdiode (7, 8, 9, 10) und/oder ein Transistor (18, 19) und/oder ein Schütz und /oder ein Relais als das wenigstens eine Schaltmittel vorgesehen ist.

9. Symmetrierungsschaltung nach einem der Ansprüche 1 bis 8, **dadurch gekennzeichnet, dass** die Widerstandsausgleichseinrichtung ein Ansteuermodul (15) vorsieht, wobei das Ansteuermodul (15) mit dem ersten und/oder dem zweiten Schaltmittel zusammenwirkt und eingerichtet ist, das erste oder das zweite oder bevorzugt das erste und das zweite Schaltmittel zu schalten.

10. Symmetrierungsschaltung nach einem der Ansprüche 1 bis 9, **dadurch gekennzeichnet, dass** die Widerstandsausgleichseinrichtung ein erstes Spannungsbestimmungsmittel (16) und/oder ein zweites Spannungsbestimmungsmittel (17) aufweist zur Bestimmung eines Spannungswerts einer ersten Spannung zwischen dem ersten Versorgungsleiter (DC+) und dem Schutzleiter (PE) und/oder eines Spannungswerts einer zweiten Spannung zwischen dem zweiten Versorgungsleiter (DC-) und dem Schutzleiter (PE), wobei das erste Spannungsbestimmungsmittel (16) dem ersten Ausgleichsschaltungszweig (5) und/oder das zweite Spannungsbestimmungsmittel (17) dem zweiten Ausgleichsschaltungszweig (6) zugeordnet sind.

11. Symmetrierungsschaltung nach Anspruch 10 **dadurch gekennzeichnet, dass** das Ansteuermodul (15) mit dem ersten und/oder dem zweiten Spannungsbestimmungsmittel zusammenwirkt derart, dass die von dem ersten und/oder dem zweiten Spannungsbestimmungsmittel (16, 17) bestimmten Spannungswerte für die erste Spannung und/oder die zweite Spannung an das Ansteuermodul (15) übertragbar sind, und/oder dass das Ansteuermodul (15) eingerichtet ist zur spannungswertabhängigen Betätigung des ersten und/oder zweiten Schaltmittels.

12. Symmetrierungsschaltung nach einem der Ansprüche 1 bis 11, **dadurch gekennzeichnet, dass** die Widerstandsausgleichseinrichtung einen Isolationsausgleichskondensator (25) als Widerstandsausgleichsmittel und eine Mehrzahl von Schaltmitteln vorsieht und dass die Schaltmittel dem Isolationsausgleichskondensator (25) so zugeordnet sind, dass der Isolationsausgleichskondensator (25) in Abhängigkeit der Schaltzustände der Schaltmittel parallel zu dem ersten Isolationswiderstand (1) oder parallel zu dem zweiten Isolationswiderstand (2) verschaltet ist.

13. Symmetrierungsschaltung nach einem der Ansprüche 1 bis 12, **dadurch gekennzeichnet, dass** die Widerstandsausgleichseinrichtung symmetrisch ausgebildet ist.

14. DC-Versorgungsstation für elektrisch betreibbare Fahrzeuge mit einer Symmetrierungsschaltung nach einem der Ansprüche 1 bis 13.

15. Symmetrierungsverfahren für eine DC-Versorgungsstation, insbesondere für eine DC-Versorgungsstation nach Anspruch 14, wobei die DC-Versorgungsstation einen ersten Versorgungsleiter (DC+) und einen zweiten Versorgungsleiter (DC-) mit je einem Anschlusspunkt (3, 4), einen Schutzleiter (PE) sowie wenigstens ein Widerstandsausgleichsmittel (11, 12, 13, 14) und mindestens ein dem wenigstens einen Widerstandsausgleichsmittel (11, 12, 13, 14) zugeordnetes Schaltmittel (7, 8, 9, 10, 18, 19) vorsieht und wobei zwischen dem ersten Versorgungsleiter (DC+) und dem Schutzleiter (PE) ein erster Isolationswiderstand (1) und zwischen dem zweiten Versorgungsleiter (DC-) und dem Schutzleiter (PE) ein zweiter Isolationswiderstand (2) gebildet sind, wobei mit Hilfe des Schaltmittels (7, 8, 9, 10, 18, 19) das Widerstandsausgleichsmittel (11, 12, 13, 14) wahlweise parallel zu dem ersten Isolationswiderstand (1) oder dem zweiten Isolationswiderstand (2) verschaltet wird derart, dass sich eine Symmetrie in Bezug auf eine über den ersten Isolationswiderstand (1) abfallende erste Spannung und eine über den zweiten Isolationswiderstand (2) abfallende zweite Spannung einstellt und/oder einer unsymmetrischen Verteilung einer Ausgangsspannung zwischen den Anschlusspunkten (3, 4) zum Erdpotential des Schutzleiters (PE) entgegengewirkt wird.

16. Symmetrierungsverfahren nach Anspruch 15, **dadurch gekennzeichnet, dass** ein erster Spannungswert für die erste Spannung zwischen dem ersten Versorgungsleiter (DC+) und dem Schutzleiter (PE) und/oder ein zweiter Spannungswert für die zweite Spannung zwischen dem zweiten Versorgungsleiter (DC-) und dem Schutzleiter (PE) bestimmt werden.

17. Symmetrierungsverfahren nach Anspruch 16, **dadurch gekennzeichnet, dass** die erste Spannung und/oder die zweite Spannung über Spannungsbestimmungsmittel (16, 17) gemessen werden und/oder dass der erste Spannungswert und/oder der zweite Spannungswert an ein Ansteuermodul (15) übertragen werden.

18. Symmetrierungsverfahren nach einem der Ansprüche 15 bis 17, **dadurch gekennzeichnet, dass** eine Mehrzahl von Schaltmitteln und ein Isolationsausgleichskondensator (25) als Widerstandsausgleichsmittel verwendet werden und dass die Schaltmittel (21, 22, 23 ,24) so betätigt werden, dass der Isolationsausgleichskondensator (25) zunächst parallel zu dem ersten Isolationswiderstand (1) vorgesehen wird und mit dem ersten Versorgungsleiter (DC+) und dem Schutzleiter (PE) verbunden wird und dass der Isolationsausgleichskondensator (25) dann parallel zu dem zweiten Isolationswiderstand (2) vorgesehen wird und mit dem zweiten Versorgungsleiter (DC-) und dem Schutzleiter (PE) verbunden wird, wobei die Schaltmittel (21, 22, 23, 24) bevorzugt getaktet und/oder im linearen Bereich betrieben werden.
